# EUROPÄISCHE PATENTSCHRIFT

(11) **EP 3 081 071 B1**
(45) Veröffentlichungstag und Bekanntmachung des Hinweises auf die Patenterteilung: **11.04.2018**
(21) Anmeldenummer: 16165038.7
(22) Anmeldetag: 13.04.2016
(51) Int. Cl.: A01D 45/00, A01G 1/04

(54) **SYSTEM ZUM ERNTEN VON PILZEN**
SYSTEM FOR HARVESTING MUSHROOMS
SYSTEME DE RECOLTE DE CHAMPIGNONS

(30) Priorität: 13.04.2015 DE 102015105606
(43) Veröffentlichungstag der Anmeldung: 19.10.2016
(73) Patentinhaber: Pilzkulturen Wesjohann GbR, 49429 Visbek (DE)
(72) Erfinder: Vogt, Christian, 49393 Lohne (DE); Kruse, Torben, 49685 Emsteck (DE)
(74) Vertreter: Isfort, Olaf

(56) Entgegenhaltungen:
- EP-A1- 0 593 680
- WO-A1-91/02450
- WO-A1-03/092354
- WO-A1-2004/012495
- WO-A1-2006/111619
- WO-A1-2012/110238
- NL-A- 9 202 065

## Beschreibung

Die Erfindung betrifft ein System zum Ernten von Pilzen, mit wenigstens einem Pflückgestell, wobei die auf einem Substrat wachsenden Pilze auf dem Pflückgestell in wenigstens einer Ebene angeordnet sind.

Aus der WO 03/092354 A1 geht ein solches System zur Kultivierung und Ernte von Pilzen hervor, umfassend wenigstens ein Transportband, das neben dem Pflückgestell verläuft und eine zur Längserstreckung des Pflückgestells parallele Förderrichtung aufweist, wobei das Transportband wenigstens eine Ausnehmung zur Aufnahme der geernteten Pilzen aufweist.

Aus der EP 0 593 680 A1 geht eine Vorrichtung zum automatischen selektiven Ernten von Pilzen hervor.

Aus der WO 2012/110238 A1 geht ein System zur Kultivierung und Ernte von Pilzen hervor.

Allgemein ist bekannt, dass Pilze in klimatisierten und je nach Pilzart in abgedunkelten oder hellen Räumen gezüchtet werden. Die auf einem Substrat, wachsenden Pilze sind dabei bevorzugt in mehreren Ebenen übereinander auf Stellagen in Beeten angeordnet, wobei das Substrat eine auf die Pilzart abgestimmte Zusammensetzung aufweist. Hierdurch wird der Zuchtraum möglichst effizient genutzt und die für die Kultivierung erforderliche Bodenfläche möglichst gering gehalten. Nachdem die Pilze eine bestimmte Größe erreicht haben, werden sie in regelmäßigen Abständen manuell abgeerntet. Damit die Pilze möglichst effektiv gepflückt werden können, ist es aus dem Stand der Technik bekannt, die erntereifen Pilze auf ein Pflückgestell zu überführen. Auf dem Pflückgestell befinden sich die Pilze bevorzugt in einer Ebene, so dass die neben dem Gestell auf dem Boden stehenden Pflückerinnen an die Pilze gut herankommen und die Pilze ohne Zusatzeinrichtungen, wie Podeste oder Lifte, leicht pflücken können. Die Pflückgestelle weisen somit eine geeignete Arbeitshöhe auf. Die Pflückerinnen pflücken bei den bekannten Systemen die Pilze direkt in Behälter, in denen die Pilze später dann auch in den Handel kommen. Die Pflückerinnen haben dabei dafür Sorge zu tragen haben, dass jeder Behälter das korrekte Füllgewicht erhält.

Nachteilig an dem bekannten System ist, dass sich damit nur beschränkte Pflückleistungen erzielen lassen, da der gesamte Pflück- und Packvorgang manuell vollzogen wird. Unter Pflückleistung versteht man die Menge von Pilzen, die pro Zeiteinheit geerntet und handelsfertig verpackt werden. Im Pilzanbau machen die Pflückkosten den größten Anteil der Produktionskosten aus, so dass ein Bedarf an Systemen besteht, die eine Erhöhung der Pflückleistung ermöglichen.

Es ist daher Aufgabe der Erfindung, ein verbessertes System zur Kultivierung und Ernte von Pilzen bereitzustellen. Insbesondere sollen die Pflückleistung erhöht und die Pflückkosten reduziert werden.

Gelöst wird diese Aufgabe ausgehend von einem System der eingangs angegebenen Art dadurch, dass ein Automaten mit einem Greiforgan, die Pilze vom Transportband nimmt und sie in Behältnisse legt, wobei eine Wiegestation, die die Behältnisse mit den darin befindlichen Pilze jeweils automatisch wiegt, derart mit dem Automaten verbunden ist, dass der Automat während des Befüllens von der Wiegestation Rückmeldung über das jeweils aktuelle Gewicht des oder der auf der Wiegestation befindlichen Behältnisses/Behältnisse erhält.

Vorteilhafte Ausgestaltungen sind jeweils Gegenstand der abhängigen Ansprüche. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Das erfindungsgemäße System weist gegenüber dem Stand der Technik den Vorteil auf, dass aufgrund des neben dem Pflückgestell verlaufenden Transportbandes die Pflückerinnen sehr effizient arbeiten können. Sie pflücken die Pilze von den Beeten und legen sie direkt auf das Transportband ab. Die dabei zurückzulegenden Wege sind minimal. Das Transportband fördert die Pilze dann zur Weiterverarbeitung, die vorteilhafterweise automatisiert ist. Hierdurch kann die Pflückleistung wesentlich erhöht werden, so dass die Kosten insgesamt gesenkt werden.

Das erfindungsgemäße Transportband ist so ausgebildet, dass es einfach mit den einzeln geernteten Pilzen bestückt werden kann. Idealerweise verläuft das Transportband im Wesentlichen parallel zu dem Pflückgestell. Das Transportband kann von dem Pflückgestell unabhängig ausgebildet sein. Dies bedeutet, dass das Transportband eine Tragkonstruktion bzw. Rahmenkonstruktion aufweist, die das Band trägt. Es ist aber auch denkbar, dass das Transportband an dem Pflückgestell befestigt bzw. in dieses konstruktiv integriert ist. Hierbei kann von einer eigenen Tragkonstruktion des Transportbands abgesehen werden. Bevorzugt ist das Transportband mit variabler Geschwindigkeit motorisch beweglich. Durch die variable Einstellbarkeit der Geschwindigkeit ist eine Anpassung an die Pflückgeschwindigkeit der die Pilze erntenden Personen möglich.

Vorteilhafterweise erstreckt sich das Transportband entlang der gesamten Länge des Pflückgestells. Dies bietet den Vorteil, dass die die Pilze erntenden Personen überall entlang des Pflückgestells stehen können und die gepflückten Pilze unmittelbar auf dem Transportband zur Weiterverarbeitung ablegen können. Das Pflücken kann somit effektiv erfolgen. Besonders bevorzugt erstreckt sich das Transportband über wenigstens ein Ende des Pflückgestells, idealerweise über dasjenige Ende, an dem sich ein Automat zur automatisierten Verpackung der Pilze befindet, hinaus. Hierdurch wird erreicht, dass der Automat gut auf die geernteten Pilze zugreifen kann.

Idealerweise handelt es sich bei der Ausnehmung des Transportbands um wenigstens einen in Längsrichtung des Transportbands verlaufenden Schlitz. Die die Pilze erntenden Personen stecken die Pilze mit den Stielen nach unten einzelnen in den Schlitz ein. Der Schlitz sollte so ausgebildet sein, dass er eine Breite aufweist, die kleiner ist als der minimale Pilzkopfdurchmesser und größer als der maximale Stieldurchmesser, so dass die Pilze mit dem Rand des Pilzkopfes jeweils seitlich neben dem Schlitz auf dem Transportband aufliegen.

Der Schlitz erstreckt sich vorteilhafterweise als durchgehender Schlitz entlang des gesamten Transportbandes. Dies bietet den Vorteil, dass die Pilze beliebig nebeneinander auf dem Band abgelegt werden können.

Zur Bildung des Schlitzes kann das Transportband zwei bandförmige, parallel und voneinander beabstandete Elemente aufweisen, die sich in Längsrichtung des Transportbands erstrecken. Idealerweise bestehen die Elemente aus einem flexiblen/elastischen Material. Durch diese Ausgestaltung wird ermöglicht, dass Pilze unterschiedlicher Größe transportiert werden können. Weisen die Pilze einen besonderes dicken Stiel auf, dann gibt das Material nach und der Schlitz weitet sich auf. Des Weiteren wird durch die Verformbarkeit erreicht, dass die Pilze, die sehr empfindlich gegenüber auf ihre Oberfläche wirkende Kräfte sind, beim Einführen in den Schlitz nicht beschädigt werden.

Grundsätzlich ist es auch denkbar, dass das Transportband eine Mehrzahl an Schlitzen aufweist. Die Schlitze können identisch sowie unterschiedlich lang und/oder breit ausgebildet sein. Die Schlitze können ferner hintereinander bzw. in Reihe oder aber auch versetzt, vorteilhafterweise parallel zueinander, angeordnet sein. Denkbar ist weiter, dass die Schlitze einzelnen Pflückplätzen zugeordnet sind. Unter Pflückplatz ist ein Ort zu verstehen, an dem die Pilze vom Beet gepflückt werden, an dem sich also eine Pflückerin befindet. Dies bietet den Vorteil, dass das Transportband auch noch für die hinteren Pflückplätze leere Schlitze aufweist, in die die Pflückerinnen die gepflückten Pilze einstecken können. Mit hinteren Pflückplätzen sind erfindungsgemäß diejenigen Plätze gemeint, die das Transportband erst erreicht, nachdem es bereits andere Pflückplätze passiert hat.

Anstelle von Schlitzen kann das Transportband eine Vielzahl von Löchern zur Aufnahme der Pilze aufweisen. Die Löcher sind dabei bevorzugt entlang des gesamten Transportbands angeordnet. Die Löcher können dabei unterschiedliche Durchmesser aufweisen.

An dem Transportband kann eine Vorrichtung zum automatischen Abtrennen der Pilzstielenden angeordnet sein. Das Abtrennen der unteren Enden der Pilzstiele gehört zum Erntevorgang und ist für die Qualität der Endprodukte unerlässlich. Während die auf dem Transportband befindlichen Pilze transportiert werden, passieren sie die Abtrennvorrichtung, wodurch deren Pilzstielenden automatisch abgeschnitten werden. Durch das automatisierte Abtrennen, das im Stand der Technik manuell durch die Pflückerinnen erfolgt, kann die Pflückleistung des erfindungsgemäßen Systems weiter verbessert werden. Ein weiterer Vorteil der automatischen Kürzung der Pilzstiele ist, dass ein möglichst gleichmäßiger u. sauberer Schnitt der Pilzstiele erfolgt. Durch einen nicht zu kurzen Abschnitt des Stiels bei der Ernte wird das Einzelgewicht der Pilze erhöht, wodurch insgesamt so ein höherer Ernteertrag geschaffen werden kann. Die Abtrennvorrichtung kann als Schneidelement wenigstens eine Klinge aufweisen, die bevorzugt parallel oder schräg zum Transportband angeordnet ist und dessen Schneide in Richtung der zu schneidenden Pilze zeigt. Die Abtrennvorrichtung kann auch eine Mehrzahl von Klingen aufweisen. Denkbar sind auch rotierende Messer als Schneidelemente.

Vorteilhafterweise weist das System zwei Transportbänder auf. Die Transportbänder erstrecken sich dabei auf sich gegenüberliegenden Seiten des Gestells und erstrecken sich bevorzugt entlang der gesamten Längserstreckung des Pflückgestells. Auf diese Weise können Pflückerinnen auf beiden Seiten des Pflückgestells arbeiten.

Das erfindungsgemäße System weist einen Automaten mit einem Greiforgan auf, der die Pilze vom Transportband nimmt und sie in ein Behältnis bzw. Behälter legt. Ein solcher Behälter ist z.B. eine Schale (aus Kunststoff oder Pappe), in der die Pilze für den Einzelhandel verpackt werden.

Bevorzugt handelt es sich bei dem Automaten um einen Roboter, insbesondere einen Industrieroboter. Das Greiforgan des Automaten kann als Sauggreifer ausgebildet sein. Besonders bevorzugt erfasst der Sauggreifer die Pilze von oben, d.h. am Pilzkopf. Der Sauggreifer kann einen Saugkopf aufweisen, wobei durch Erzeugung eines Unterdrucks der Pilz jeweils angesaugt, d.h. gegriffen wird. Idealerweise ist der Automat als Mehrfachgreifer ausgebildet. Dies bedeutet, dass er gleichzeitig mehrere Pilze aufnehmen kann.

Der Automat ist bevorzugt auf einem mobilen Gestell angeordnet. Idealerweise weist das Gestell Rollen auf, so dass es manuell an das Pflückgestell herangeschoben werden kann. Das Gestell kann Fixierelemente aufweisen, mit denen es am Pflückgestell fixiert werden kann. Hierdurch wird sichergestellt, dass während des Einsatzes das mobile Gestell sicher am Pflückgestell angeordnet ist, so dass eine einwandfreie Befüllen der Behälter ermöglicht wird.

Der Automat ist bevorzugt an der Stirnseite bzw. einem Ende des Pflückgestells angeordnet. Hierdurch gelangen alle auf dem Transportband befindlichen Pilze in den Aktionsradius des Automaten und können von diesem ergriffen und in die Behältnisse gelegt werden. Hierdurch lässt sich mit wenigen Vorrichtungen ein äußerst effizientes Ernten von Pilzen erreichen. Idealerweise ist der Automat beweglich auf dem mobilen Gestell angeordnet. Dies ist dann besonders von Vorteil, wenn die Pilze auf beiden Seiten entlang des Pflückgestells gepflückt werden und auf entsprechende Transportbänder gelegt werden. Der Automat kann dann wahlweise entweder zur einen Seite oder zur anderen Seite gefahren werden und dort die Pilze aufnehmen und in die Behälter legen. Der Automat kann beispielsweise entlang einer Schiene verschiebbar angeordnet sein. Das Verfahren des Automaten kann sowohl manuell wie auch automatisiert erfolgen.

Der Automat kann so ausgebildet sein, dass er die auf dem Transportband befindlichen Pilze nicht einfach der Reihe nach aufnimmt und in Behältnisse legt, sondern selektiert und somit nur ganz bestimmte Pilze ergreift. Durch die Selektion der Pilze ist es z.B. möglich, die Behälter mit Pilzen in einer gewünschten Größenverteilung zu befüllen. Ferner lässt sich so gezielt ein Füllgewicht erreichen, das dem Sollgewicht möglichst nahe kommt. Weist der zu befüllende Behälter z.B. annähernd sein Sollgewicht auf, dann sucht der Automat gezielt nach einem möglichst kleinen Pilz, ergreift diesen und legt ihn in dem Behälter ab.

Idealerweise weist das System bzw. der Automat eine Einrichtung zur bildlichen Erfassung der Pilze bzw. der Pilzkopfgröße auf. Die Einrichtung lokalisiert die

Pilze auf dem Transportband, so dass der Automat mit seinem Greiforgan gezielt darauf zugreifen kann. Der Automat wird auf Basis der erfassten Bilddaten gesteuert. Die Einrichtung bewertet dabei insbesondere den Durchmesser der Pilzköpfe. Das Gewicht eines Pilzes korreliert mit dem Pilzkopfdurchmesser. Erkennt das System den Pilzkopfdurchmesser, kann es daraus näherungsweise das Gewicht ermitteln, z.B. durch Berechnung mittels einer empirisch vorab ermittelten Formel. Zum Erfassen der Pilzkopfgröße kann der Automat eine Kamera oder eine andere geeignete Sensoreinrichtung aufweisen.

Das erfindungsgemäße System weist eine Wiegestation auf. Die Wiegestation dient zur automatischen Erfassung des Gewichts der Behältnisse mit den darin befindlichen Pilzen. Die Wiegestation befindet sich bevorzugt in unmittelbarer Nähe zum Automaten. Der Automat füllt die geernteten Pilze in Behälter, die sich auf der Wiegestation befinden. Die Wiegestation ist vorteilhafterweise so ausgebildet, dass das Gewicht von mehreren Behältern gleichzeitig erfasst werden kann. Hierzu weist sie bevorzugt mehrere Wiegeplätze auf. Dies bietet den Vorteil, dass der Automat gleichzeitig mehrere Behälter befüllen kann. Weist der Automat zudem eine Einrichtung zur Erfassung der Pilzgröße bzw. der Pilzkopfgröße auf, so kann der Automat die Behälter selektiv mit Pilzen nach Größe und Gewicht befüllen, wobei der Automat die Pilze kontinuierlich von dem Transportband greifen kann.

Die Wiegestation und der Automat sind idealerweise so miteinander verbunden, dass beim Erreichen des Sollgewichts der jeweilige Behälter von der Wiegestation bzw. dem Wiegeplatz automatisch entfernt und sodann ein neuer, leerer Behälter auf die Wiegestation/den Wiegeplatz gestellt wird. Erfindungsgemäß sind die Wiegestation und der Automat so miteinander verbunden, dass der Automat kontinuierlich von der Wiegestation Rückmeldung über das jeweils aktuelle Gewicht des/der auf der Wiegestation befindlichen Behälter erhält.

Ferner kann das System so ausgebildet sein, dass die zu befüllenden Behälter, wie z.B. Schalen, automatisch auf eine Füllposition bzw. auf einen Wiegeplatz geführt und nach dem Befüllen automatisch von dieser/diesem entfernt und zur weiteren Handhabung transportiert werden. Zur Zuführung der Behälter kann das System einen oder mehrere Schalenabstapler an sich bekannter Art aufweisen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen. Die Erfindung ist jedoch nicht auf die gezeigte Ausführungsvariante beschränkt. Insbesondere umfasst die Erfindung, soweit es technisch sinnvoll ist, beliebige Kombinationen der technischen Merkmale, die in den Ansprüchen aufgeführt oder in der Beschreibung als erfindungsrelevant beschrieben sind.

Es zeigen:
- Fig. 1: schematische Draufsicht auf ein erfindungsgemäßes System,
- Fig. 2: schematische Seitenansicht auf ein erfindungsgemäßes System,
- Fig. 3: schematische Draufsicht auf ein erfindungsgemäßes System in einer weiteren Ausgestaltung.

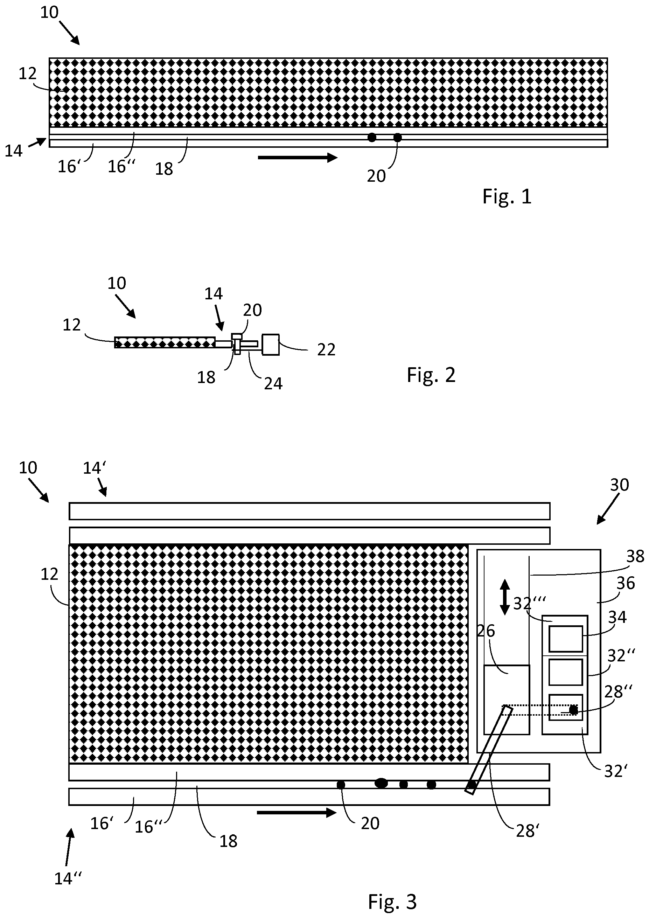

Figur 1 zeigt eine schematische Draufsicht auf ein erfindungsgemäßes System 10 in einer möglichen Ausgestaltung. Das System 10 zur Kultivierung und Ernte von Pilzen weist wenigstens ein Pflückgestell 12 auf, wobei die auf einem Substrat wachsenden Pilze auf dem Pflückgestell 12 in wenigstens einer Ebene angeordnet sind. Um den Platz optimal ausnutzen zu können, kann es vorteilhaft sein, dass die Pilze auf mehreren Ebenen übereinander gezüchtet werden. Neben dem Pflückgestell 12 verläuft ein Transportband 14, das idealerweise unmittelbar an das Pflückgestell 12 angrenzt und an diesem befestigt ist. Das Transportband 14 hat eine zur Längserstreckung des Pflückgestells 12 aufweisende Förderrichtung. Die Förderrichtung des Transportbands 14 ist in Figur 1 durch einen Pfeil dargestellt. Erfindungsgemäß weist das Transportband 14 wenigstens eine Ausnehmung 18 zur Aufnahme der geernteten Pilze 20 auf. In Figur 1 erstreckt sich das Transportband 14 entlang der gesamten Länge des Pflückgestells 12. Das Transportband 14 weist einen einzigen in Längsrichtung des Transportbands 14 verlaufenden Schlitz 18 auf, der sich entlang des gesamten Transportbandes 14 erstreckt. Dies bietet den Vorteil, dass die Pilze 20 nach dem Pflücken unmittelbar auf das Band 14 gelegt werden können. Der Schlitz 18 des Transportbands 14 wird durch zwei bandförmige, voneinander beabstandete Elemente 16', 16" gebildet. Die Elemente 16', 16" bestehen idealerweise aus einem elastischen bzw. flexiblen Material. Hierdurch wird erreicht, dass die Pilze, die sehr empfindlich gegenüber auf ihre Oberfläche wirkenden Kräften sind, beim Einführen in den Schlitz nicht beschädigt werden, da die Elemente 16', 16" nachgeben.

Figur 2 zeigt eine schematische Seitenansicht auf ein erfindungsgemäßes System 10. An dem Transportband 14 ist eine Vorrichtung 22 zum automatischen Abtrennen der Pilzstiele angeordnet. Das Abtrennen der Pilzstiele gehört zum Erntevorgang und ist für die Qualität der Endprodukte unerlässlich. Die auf dem Transportband 14 befindlichen Pilze 20 passieren auf ihrem Weg zum Abpacken die Abtrennvorrichtung 22, wodurch die Pilzstielenden automatisch abgeschnitten werden. Das automatisierte Abtrennen führt zu einer verbesserten Pflückleistung. Die Abtrennvorrichtung 22 weist als Schneidelement eine Klinge/Schneide 24 auf, die parallel zum Transportband 14 angeordnet ist. Hierdurch erhalten die Pilze 20 einen geraden Schnitt, was besonders vorteilhaft für die Qualität der Pilze 20 ist.

Figur 3 zeigt eine schematische Draufsicht auf ein erfindungsgemäßes System 10. Das System 10 weist zwei Transportbänder 14', 14" auf. Die Transportbänder 14', 14" erstrecken sich dabei auf sich gegenüberliegenden Seiten des Pflückgestells 12. Vorteilhafterweise erstrecken sich die Transportbänder 14', 14" über wenigstens ein Ende des Pflückgestells 12, idealerweise über das Ende, an dem sich ein Automat 26 befindet, hinaus. Hierdurch wird erreicht, dass der Automat 26 besser auf die gepflückten Pilze 20 zugreifen kann.

An einer Stirnseite des Pflückgestells 12 ist der Automat 26 mit Greiforgan 28 angeordnet, der die Pilze 20 von den Transportbändern 14', 14" nimmt und sie in Behältnisse 34 legt. Bei dem Automat 26 handelt es sich bevorzugt um einen Roboter an sich bekannter Bauart. Der Automat 36 ist auf einem mobilen Gestell 36, angeordnet. Idealerweise weist das Gestell Rollen auf, so dass es manuell an das Pflückgestell herangeschoben werden kann.

Der Automat 26 ist beweglich auf dem mobilen Gestell 36 angeordnet. Hierdurch kann der Automat 26 Pilze von beiden Transportbändern 14', 14" ergreifen und in Behälter 34 legen. Der Automat ist entlang einer Schiene 38 verschiebbar angeordnet, die bevorzugt entlang der Stirnseite des Pflückgestells 12 verläuft.

Das System 10 weist zudem eine Wiegestation 30 auf. Die Wiegestation 30 dient zur automatischen Erfassung des Gewichts der in den Behältern 34 befindlichen Pilze 20. Die Wiegestation 30 befindet sich in unmittelbarer Nähe zum Automaten 26. Der Automat 26 füllt die geernteten Pilze 20 in die Behälter 34, die sich auf der Wiegestation 30 befinden. Die Wiegestation weist mehrere Wiegeplätze 32', 32", 32'" auf, so dass die Wiegestation 30 das Gewicht von mehreren Behälter 34 gleichzeitig und unabhängig voneinander erfassen kann. Hierdurch ist es möglich, dass der Automat 26 gleichzeitig mehrere Behälter 34 befüllen kann.

### Bezuaszeichenliste

- 10: System zur Kultivierung und Ernte von Pilzen
- 12: Pflückgestell
- 14: Transportband
- 16: bandförmige Elemente des Transportbands
- 18: Schlitz
- 20: Pilz
- 22: Vorrichtung zum Abtrennen der Pilzstiele
- 24: Schneide
- 26: Automat
- 28: Greiforgan Automat
- 30: Wiegestation
- 32: Wiegeplatz
- 34: Behälter
- 36: mobiles Gestellt
- 38: Schiene

## Patentansprüche

1. System (10) zur Kultivierung und Ernte von Pilzen, mit wenigstens einem Pflückgestell (12), wobei die auf einem Substrat wachsenden Pilze (20) auf dem Pflückgestell (12) in wenigstens einer Ebene angeordnet sind, und wenigstens ein Transportband (14), das neben dem Pflückgestell (12) verläuft und eine zur Längserstreckung des Pflückgestells (12) parallele Förderrichtung aufweist, wobei das Transportband (14) wenigstens eine Ausnehmung (18) zur Aufnahme der geernteten Pilzen (20) aufweist **gekennzeichnet durch** einen Automaten (26) mit einem Greiforgan (28), der die Pilze (20) vom Transportband (14) nimmt und sie in Behältnisse (34) legt, und eine Wiegestation (30), die die Behältnisse (34) mit den darin befindlichen Pilze (20) jeweils automatisch wiegt, wobei die Wiegestation (30) derart mit dem Automaten (26) verbunden ist, dass der Automat (26) während des Befüllens von der Wiegestation (30) Rückmeldung über das jeweils aktuelle Gewicht des oder der auf der Wiegestation (30) befindlichen Behältnisses/Behältnisse (34) erhält.

2. System (10) nach Anspruch 1, **dadurch gekennzeichnet, dass** sich das Transportband (14) im Wesentlichen entlang der gesamten Länge des Pflückgestells (12) erstreckt.

3. System (10) nach einem der Ansprüche 1 oder 2, **dadurch gekennzeichnet, dass** das Transportband (14) wenigstens einen in Längsrichtung des Transportbands (14) verlaufenden Schlitz (18) zur Aufnahme der geernteten Pilze aufweist.

4. System (10) nach dem vorangehenden Anspruch, **dadurch gekennzeichnet, dass** sich der Schlitz (18) entlang des gesamten Transportbandes (14) erstreckt.

5. System (10) nach dem vorangehenden Anspruch, **dadurch gekennzeichnet, dass** das Transportband (14) bandförmige, voneinander beabstandete Elemente (16', 16") aufweist, die sich in Längsrichtung des Transportbands (14) erstrecken und den Schlitz (18) bilden.

6. System (10) nach dem vorhergehenden Anspruch, **dadurch gekennzeichnet, dass** die den Schlitz (18) bildenden Elemente des Transportbands (14) aus einem elastischen bzw. flexiblen Material bestehen.

7. System (10) nach einem der vorangehenden Ansprüche, **dadurch gekennzeichnet, dass** an dem Transportband (14) eine Vorrichtung (22) zum Abtrennen der Pilzstielenden angeordnet ist.

8. System (10) nach einem der vorangehenden Ansprüche, **dadurch gekennzeichnet, dass** das System (10) zwei Transportbänder (14) aufweist, wobei die Transportbänder (14) auf sich gegenüberliegenden Seiten des Gestells (12) angeordnet sind.

9. System (10) nach dem vorangehenden Anspruch, **dadurch gekennzeichnet, dass** das System (10) eine Einrichtung zur bildlichen Erfassung der Pilze bzw. der Pilzkopfgröße aufweist.

10. System (10) nach einem der Ansprüche 1 bis 9, **dadurch gekennzeichnet, dass** der Automat (26) bevorzugt an der Stirnseite eines Pflückgestells (12) angeordnet ist.

11. System (10) nach dem vorangehenden Anspruch, **dadurch gekennzeichnet, dass** die Wiegestation (30) mehrere Wiegeplätze (32) umfasst.

## Claims

1. System (10) for cultivating and harvesting mushrooms, having at least one picking frame (12), the mushrooms (20) growing on a substrate being arranged on the picking frame (12) in at least one plane,
at least one transport belt (14), which extends beside the picking frame (12) and has a conveying direction parallel to the longitudinal extent of the picking frame (12), the transport belt (14) having at least one recess (18) for holding the harvested mushrooms (20),
**characterized by** an automatic machine (26) having a gripping member (28), which takes the mushrooms (20) from the transport belt (14) and lays them in containers (34), and
a weighing station (30) which respectively automatically weighs the containers (34) with the mushrooms (20) located therein, wherein the weighing station (30) is connected to the automatic machine (26) in such a way that, during the filling, the automatic machine (26) receives feedback from the weighing station (30) about the respective current weight of the container/containers (34) located on the weighing station (30).

2. System (10) according to Claim 1, **characterized in that** the transport belt (14) extends substantially along the entire length of the picking frame (12).

3. System (10) according to either of Claims 1 and 2, **characterized in that** the transport belt (14) has at least one slot (18), extending in the longitudinal direction of the transport belt (14), for holding the harvested mushrooms.

4. System (10) according to the preceding claim, **characterized in that** the slot (18) extends along the entire transport belt (14).

5. System (10) according to the preceding claim, **characterized in that** the transport belt (14) has strip-like elements (16', 16") which are spaced apart from one another, extend in the longitudinal direction of the transport belt (14) and form the slot (18).

6. System (10) according to the preceding claim, **characterized in that** the elements of the transport belt (14) that form the slot (18) consist of an elastic or flexible material.

7. System (10) according to one of the preceding claims, **characterized in that** a device (22) for severing the mushroom stalk ends is arranged on the transport belt (14).

8. System (10) according to one of the preceding claims, **characterized in that** the system (10) has two transport belts (14), the transport belts (14) being arranged on opposite sides of the frame (12) .

9. System (10) according to the preceding claim, **characterized in that** the system (10) has an apparatus for visually detecting the mushrooms or the mushroom head size.

10. System (10) according to one of Claims 1 to 9, **characterized in that** the automatic machine (26) is preferably arranged at the end of a picking frame (12).

11. System (10) according to the preceding claim, **characterized in that** the weighing station (30) comprises multiple weighing locations (32).

## Revendications

1. Système (10) pour la cultivation et la récolte de champignons, comprenant au moins une armature de cueillette (12), les champignons (20) poussant sur un substrat étant disposés dans au moins un plan sur l'armature de cueillette (12), et au moins une bande transporteuse (14) qui s'étend à côté de l'armature de cueillette (12) et qui présente une direction de transport parallèle à l'étendue longitudinale de l'armature de cueillette (12), la bande transporteuse (14) présentant au moins un évidement (18) pour recevoir les champignons récoltés (20),
**caractérisé par** un automate (26) avec un organe de préhension (28) qui prélève les champignons (20) de la bande transporteuse (14) et les dépose dans des récipients (34), et un poste de pesée (30) qui pèse automatiquement les récipients (34) respectifs avec les champignons (20) contenus dans ceux-ci, le poste de pesée (30) étant connecté à l'automate (26) de telle sorte que l'automate (26), pendant le remplissage du poste de pesée (30), reçoive des informations en retour concernant le poids actuel dans chaque cas du récipient ou des récipients (34) se trouvant sur le poste de pesée (30).

2. Système (10) selon la revendication 1, **caractérisé en ce que** la bande transporteuse (14) s'étend essentiellement le long de toute la longueur de l'armature de cueillette (12).

3. Système (10) selon l'une quelconque des revendications 1 ou 2, **caractérisé en ce que** la bande transporteuse (14) présente au moins une fente (18) s'étendant dans la direction longitudinale de la bande transporteuse (14) pour recevoir les champignons récoltés.

4. Système (10) selon la revendication précédente, **caractérisé en ce que** la fente (18) s'étend le long de toute la bande transporteuse (14).

5. Système (10) selon la revendication précédente, **caractérisé en ce que** la bande transporteuse (14) présente des éléments en forme de bande, espacés les uns des autres (16', 16''), qui s'étendent dans la direction longitudinale de la bande transporteuse (14) et forment la fente (18).

6. Système (10) selon la revendication précédente, **caractérisé en ce que** les éléments formant la fente (18) de la bande transporteuse (14) se composent d'un matériau élastique ou flexible.

7. Système (10) selon l'une quelconque des revendications précédentes, **caractérisé en ce qu'**un dispositif (22) est disposé sur la bande transporteuse (14) pour séparer les extrémités des pieds de champignons.

8. Système (10) selon l'une quelconque des revendications précédentes, **caractérisé en ce que** le système (10) présente deux bandes transporteuses (14), les bandes transporteuses (14) étant disposées sur des côtés opposés de l'armature (12).

9. Système (10) selon la revendication précédente, **caractérisé en ce que** le système (10) présente un dispositif pour détecter par imagerie les champignons ou la taille des chapeaux des champignons.

10. Système (10) selon l'une quelconque des revendications 1 à 9, **caractérisé en ce que** l'automate (26) est de préférence disposé sur le côté frontal d'une armature de cueillette (12).

11. Système (10) selon la revendication précédente, **caractérisé en ce que** le poste de pesée (30) comprend plusieurs emplacements de pesée (32).
